# EUROPEAN PATENT SPECIFICATION

(11) **EP 4 273 417 B1**
(45) Date of publication and mention of the grant of the patent: **03.06.2026**
(21) Application number: 23170446.1
(22) Date of filing: 27.04.2023
(51) Int. Cl.: F16D 3/72, F16D 13/26, F16F 15/129, B64D 27/40, F16C 23/02, F16F 7/04, F16F 15/121, F16F 15/10, F16C 3/02

(54) **DAMPER FOR A SHAFT IN AN AIRCRAFT**
DÄMPFER FÜR EINE WELLE IN EINEM FLUGZEUG
AMORTISSEUR POUR UN ARBRE DANS UN AÉRONEF

(30) Priority: 04.05.2022 US 202217736510
(43) Date of publication of application: 08.11.2023
(73) Proprietor: Hamilton Sundstrand Corporation, Charlotte, NC 28217-4578 (US)
(72) Inventor: COOLING, Aaron, Rockford, IL, 61108 (US); BEHLING, David S., Belvidere, 61008 (US); BERRY, Nathan A., Roscoe, IL, 61073 (US); BOLGERT, Thomas A., Roscoe, IL, 61073 (US)
(74) Representative: Dehns

(56) References cited:
- US-A- 1 965 742
- US-A- 2 734 359
- US-A- 4 365 686
- US-A- 6 095 923
- US-B1- 11 320 022

## Description

### BACKGROUND

Exemplary embodiments pertain to the art of aircraft and, more particularly, to a thrust damper for a shaft in an aircraft.

Aircraft include a variety of shafts that transmit power from a source to another mechanism. For example, a shaft may connect a gas-breathing engine including a turbine to a generator. That is, the shaft may have a first end connected to a turbine output, in a non-limiting example via a gearbox, and a second end connected to a generator input. In some systems, the shaft may include an inner shaft that provides an interface to the gearbox and the generator and an outer generator rotor shaft. The interface may include an input shaft. At certain operating conditions, the input shaft may torsionally oscillate relative to the outer shaft. US 6 095 923 relates to a propeller shaft. US 2 734 359 relates to a flexible drive.

### BRIEF DESCRIPTION

Disclosed in accordance with a non-limiting example is a shaft system including an outer shaft including an outer surface and an inner surface defining a conduit and an inner shaft extending along at least a portion of the conduit. The inner shaft includes a radially extending passage. The inner shaft has a first end and a second end that is opposite the first end. An input member is arranged at the first end of the inner shaft. A thrust damper is arranged between the input member and the inner shaft. The thrust damper constrains relative rotation between the inner shaft and the outer shaft.

A thrust damper retainer is fixedly connected to the outer shaft, wherein the thrust damper is supported by the thrust damper retainer.

A clutch system is arranged between the input member and the inner shaft, the clutch system selectively connecting the input member and the inner shaft.

Additionally, or alternatively, in this or other non-limiting examples, the clutch system comprises a dog tooth clutch.

Additionally, or alternatively, in this or other non-limiting examples, the thrust damper is arranged radially outwardly of the clutch system.

Additionally, or alternatively, in this or other non-limiting examples, a coupler shaft is arranged between the input member and the inner shaft, the coupler shaft including an input end portion mechanically connected to the input member, an output end portion that selectively abuts the clutch system, and an intermediate portion, the intermediate portion including a flange that extends radially outwardly of the coupler shaft.

Additionally, or alternatively, in this or other non-limiting examples, the thrust damper retainer includes a radially inwardly projecting flange section disposed between the flange on the coupler shaft and the thrust damper.

Additionally, or alternatively, in this or other non-limiting examples, the thrust damper retainer includes a wall portion that extends from the radially inwardly projecting flange section between the coupler shaft and the outer shaft, the thrust damper being press-fit onto the thrust damper retainer adjacent to the radially inwardly projecting flange section.

Additionally, or alternatively, in this or other non-limiting examples, the coupler shaft is mechanically connected to the input member through a splined interface.

Additionally, or alternatively, in this or other non-limiting examples, a frictional interface exists between the thrust damper and the inner shaft.

Disclosed in accordance with another non-limiting example, an aircraft system includes an air breathing engine including a compressor, a turbine mechanically connected to the compressor, and a combustor fluidically connected to the compressor and the turbine. A gearbox is mechanically connected to the turbine. The aircraft further includes a generator and a shaft system operatively connecting the gearbox and the generator. The shaft system includes an outer shaft including an outer surface and an inner surface defining a conduit and an inner shaft extending along at least a portion of the conduit. The inner shaft includes a radially extending passage. The inner shaft has a first end and a second end that is opposite the first end. An input member is arranged at the first end of the inner shaft. A thrust damper is arranged between the input member and the inner shaft. The thrust damper constrains relative rotation between the inner shaft and the outer shaft.

Additionally, or alternatively, in this or other non-limiting examples, a thrust damper retainer is fixedly connected to the outer shaft, wherein the thrust damper is supported by the thrust damper retainer.

Additionally, or alternatively, in this or other non-limiting examples, a clutch system is arranged between the input member and the inner shaft, the clutch system selectively connecting the input member and the inner shaft.

Additionally, or alternatively, in this or other non-limiting examples, the clutch system comprises a dog tooth clutch.

Additionally, or alternatively, in this or other non-limiting examples, the thrust damper is arranged radially outwardly of the clutch system.

Additionally, or alternatively, in this or other non-limiting examples, a coupler shaft is arranged between the input member and the inner shaft, the coupler shaft includes an input end portion mechanically connected to the input member, an output end portion that selectively abuts the clutch system, and an intermediate portion. The intermediate portion includes a flange that extends radially outwardly of the coupler shaft.

Additionally, or alternatively, in this or other non-limiting examples, the thrust damper retainer includes a radially inwardly projecting flange section disposed between the flange on the coupler shaft and the thrust damper, the thrust damper being press-fit onto the thrust damper retainer adjacent to the radially inwardly projecting flange section.

Additionally, or alternatively, in this or other non-limiting examples, the thrust damper retainer includes a wall portion that extends from the radially inwardly projecting flange section between the coupler shaft and the outer shaft.

Additionally, or alternatively, in this or other non-limiting examples, the coupler shaft is mechanically connected to the input member through a splined interface.

Additionally, or alternatively, in this or other non-limiting examples, a frictional interface exists between the thrust damper and the inner shaft.

### BRIEF DESCRIPTION OF THE DRAWINGS

The following descriptions should not be considered limiting in any way. With reference to the accompanying drawings, like elements are numbered alike:
FIG. 1 depicts an air breathing engine for an aircraft connected to a generator through a shaft system including a centrifugally actuated damper, in accordance with a non-limiting example;
FIG. 2 is a cross-sectional side view of the shaft system of FIG. 1, in accordance with a non-limiting example; and
FIG. 3 is a partial axial cross-sectional view of an input end of the shaft system of FIG. 2.

### DETAILED DESCRIPTION

A detailed description of one or more embodiments of the disclosed apparatus and method are presented herein by way of exemplification and not limitation with reference to the Figures.

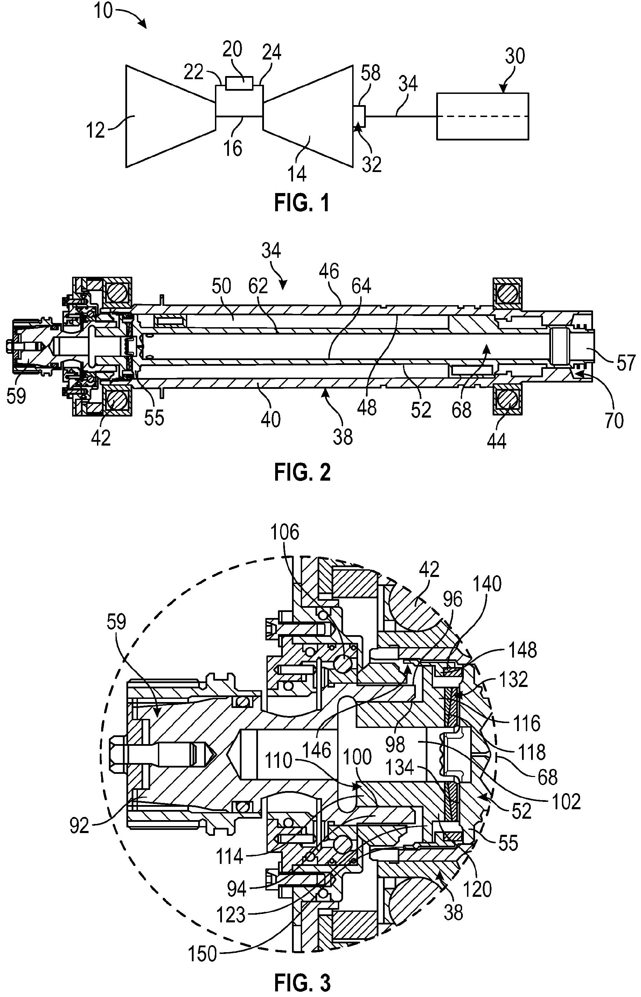

An aircraft system, shown in the form of an air-breathing engine is indicated generally at 10 in FIG. 1. Air-breathing engine 10 includes a compressor 12 mechanically and fluidically connected to a turbine 14. A shaft 16 mechanically connects compressor 12 with turbine 14. A combustor 20 fluidically connects compressor 12 with turbine 14. Combustor 20 includes a combustor inlet 22 connected to compressor 12 and a combustor outlet 24 connected to turbine 14. Air is passed into combustor 20 from compressor 12, combined with a fuel and combusted to form hot gases that pass into and expand through turbine 14 to create power.

A majority of the power generated by air-breathing engine 10 is used for flight operations. A portion of the power is used to drive a generator 30 that generates electrical power for the aircraft. Towards that end, generator 30 is connected to an output 32 of turbine 14 through a shaft system 34. In a non-limiting example shown in FIG. 2, shaft system 34 includes an outer shaft 38 that may define a rotor shaft 40. Outer shaft 38 is supported in generator 30 by a first bearing 42 and a second bearing 44. Outer shaft 38 includes an outer surface 46 and an inner surface 48 defining a conduit 50. Outer surface 46 may support rotor windings (not shown). At this point, it should be understood that while described in terms of connecting an air-breathing engine and a generator, the shaft system in accordance with non-limiting examples, may be used in a wide variety of applications.

In a non-limiting example, an inner shaft 52 is arranged within conduit 50 and selectively coupled to outer shaft 38. Inner shaft 52 defines a torsion shaft and includes a first end 55 and a second end 57. Second end 57 is opposite first end 55. First end 55 includes an input member 59 that provides an interface with turbine output 32. In a non-limiting example, turbine output 32 may take the form of a gearbox 61. Inner shaft 52 includes an outer surface section 62 and an inner surface section 64 that forms a hollow interior 68. Inner shaft 52 is coupled to outer shaft 38 through a coupling 70. Coupling 70 may take the form of a splined coupling (not separately labeled).

Referring to FIG. 3 and with continued reference to FIG. 2, in a non-limiting example, input member 59 includes a first end portion 92 and a second end portion 94. Second end portion 94 is opposite first end portion 92. Second end portion 94 includes an outer surface portion 96 and an inner surface portion 98 that supports a plurality of splines 100. A recess 102 is present in the input member 59 at second end portion 94. Plurality of splines 100 project radially inwardly from inner surface portion 98 into recess 102. Input member 59 is supported by a bearing 106 that may be fixedly mounted relative to first bearing 42.

In a non-limiting example, a coupler shaft 110 is connected to input member 59. Coupler shaft 110 includes an input end portion 114 and an output end portion 116 including an axial end face 118. An intermediate portion 120 extends between input end portion 114 and output end portion 116. In a non-limiting example, input end portion 114 includes a spline receiving surface (not separately labeled) that interfaces with plurality of splines 100 in input member 59. In a non-limiting example, coupler shaft 110 includes a flange 123 that projects radially outwardly from intermediate portion 120.

In a non-limiting example, a clutch system 132 is disposed between first end 55 of inner shaft 52 and axial end face 118 of coupler shaft 110. Clutch system 132 may take the form of a dog tooth clutch 134 that transfers mechanical energy from gearbox 61 into inner shaft 52. In a non-limiting example, a thrust damper 140 is disposed between flange 148 and first end 55 of inner shaft 52. Thrust damper 140 extends radially outwardly of and about clutch system 132. In a non-limiting example, thrust damper 140 acts to dampen torsional oscillations of outer shaft 38 relative to inner shaft 52 at various operating conditions. Thrust damper 140 may be formed from a variety of materials that establish a selected frictional interface or coefficient of friction sufficient to dampen oscillations of outer shaft 38 relative to inner shaft 52. The particular type of material selected may depend on the material used to form outer shaft 38. In a non-limiting example, the selected material will have a high wear resistance. A high wear resistance should be understood to describe that thrust damper 140 would not wear more than 0.005-inch (0.127-mm) over the operational life of shaft system 34.

In a non-limiting example, a thrust damper retainer 146 is fixedly connected to outer shaft 38 and is disposed between flange 123 and thrust damper 140. In a non-limiting example, thrust damper retainer 146 and outer shaft 38 are joined through a threaded connection (not separately labeled). Thrust damper retainer 146 includes a radially inwardly projecting flange 148 that is disposed between flange 123 and thrust damper 140. **In** a non-limiting example, thrust damper 140 is press-fit onto thrust damper retainer 146 adjacent to radially inwardly projecting flange. A wall portion 150 extends axially outwardly of radially inwardly projecting flange 148 over flange 123. With this arrangement, thrust damper retainer 146 positions and retains thrust damper 140 against first end 55 of inner shaft 52. **In** a non-limiting example, a spring (not shown) may provide a biasing force that creates contact between thrust damper 140 and first end 55 of inner shaft 52. The amount of biasing force may vary and could depend in material selection for thrust damper 140.

**In** a non-limiting example, moving contact between thrust damper 140 and first end 55 of inner shaft 52 creates a frictional force. More specifically, relative motion between thrust damper 140 and inner shaft 52 will create a frictional force that is exerted in a direction opposite the relative motion and thus will dampen oscillations. When torque changes, an angle of twist along inner shaft 52 changes. That is, given that inner shaft 52 drives outer shaft 38 via coupling 70, and a frictional interface exists at input member 59, torque change occur. Thus, when under a varying load, inner shaft 52 twists or untwists and creates relative motion at coupling 70. Therefore, it should be understood that the frictional interface established by coupling 66 ensures that angular relative motion created by torque transients are damped by thrust damper 140.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. **In** addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure. The invention is defined by the appended claims.

## Claims

1. A shaft system (34) comprising:
an outer shaft (38) including an outer surface and an inner surface defining a conduit (50);
an inner shaft (52) extending along at least a portion of the conduit, the inner shaft (52) including a radially extending passage, the inner shaft (52) having a first end (55) and a second end (57) that is opposite the first end;
an input member (59) arranged at the first end of the inner shaft (52); and
a thrust damper (140) arranged between the input member (59) and the inner shaft (52), the thrust damper (140) configured to constrain relative rotation between the inner shaft (52) and the outer shaft (38);
a thrust damper retainer (146) fixedly connected to the outer shaft (38), wherein the thrust damper (140) is supported by the thrust damper retainer (146); and **characterized by**:
a clutch system (132) arranged between the input member (59) and the inner shaft (52), the clutch system (132) selectively connecting the input member (59) and the inner shaft (52).

2. The shaft system according to claim **1,** wherein the clutch system (132) comprises a dog tooth clutch.

3. The shaft system according to claim **1,** wherein the thrust damper (140) is arranged radially outwardly of the clutch system (132).

4. The shaft system according to claim **1,** further comprising: a coupler shaft (110) arranged between the input member (59) and the inner shaft (52), the coupler shaft (110) including an input end portion (114) mechanically connected to the input member, an output end portion (116) that selectively abuts the clutch system (132), and an intermediate portion (120), the intermediate portion (120) including a flange (123) that extends radially outwardly of the coupler shaft (110).

5. The shaft system according to claim 4, wherein the thrust damper retainer (146) includes a radially inwardly projecting flange section disposed between the flange (123) on the coupler shaft and the thrust damper (140).

6. The shaft system according to claim 5, wherein the thrust damper retainer (146) includes a wall portion that extends from the radially inwardly projecting flange section between the coupler shaft (110) and the outer shaft (38), the thrust damper (140) being press-fit onto the thrust damper retainer (146) adjacent to the radially inwardly projecting flange section.

7. The shaft system according to claim 4, wherein the coupler shaft (110) is mechanically connected to the input member (59) through a splined interface.

8. The shaft system according to any preceding claim, wherein a frictional interface exists between the thrust damper (140) and the inner shaft (52).

9. An aircraft system comprising:
an air breathing engine (10) including a compressor (12), a turbine (14) mechanically connected to the compressor, and a combustor (20) fluidically connected to the compressor (12) and the turbine (14);
a gearbox mechanically connected to the turbine;
a generator (30); and
a shaft system (34), as claimed in any preceding claim, operatively connecting the gearbox and the generator.

## Patentansprüche

1. Wellensystem (34), umfassend:
eine Außenwelle (38), die eine Außenfläche und eine Innenfläche einschließt, die einen Kanal (50) definieren;
eine Innenwelle (52), die sich entlang mindestens eines Teils des Kanals erstreckt, wobei die Innenwelle (52) einen sich radial erstreckenden Durchgang einschließt, wobei die Innenwelle (52) ein erstes Ende (55) und ein zweites Ende (57) aufweist, das dem ersten Ende gegenüberliegt;
ein Eingangselement (59), das an dem ersten Ende der Innenwelle (52) angeordnet ist; und
einen Schubdämpfer (140), der zwischen dem Eingangselement (59) und der Innenwelle (52) angeordnet ist, wobei der Schubdämpfer (140) konfiguriert ist, um eine relative Drehung zwischen der Innenwelle (52) und der Außenwelle (38) einzuschränken;
eine Schubdämpferhalterung (146), die fest mit der Außenwelle (38) verbunden ist, wobei der Schubdämpfer (140) durch die Schubdämpferhalterung (146) gestützt wird; und **gekennzeichnet durch**:
ein Kupplungssystem (132), das zwischen dem Eingangselement (59) und der Innenwelle (52) angeordnet ist, wobei das Kupplungssystem (132) das Eingangselement (59) und die Innenwelle (52) selektiv verbindet.

2. Wellensystem nach Anspruch 1, wobei das Kupplungssystem (132) eine Klauenkupplung umfasst.

3. Wellensystem nach Anspruch 1, wobei der Schubdämpfer (140) radial außerhalb des Kupplungssystems (132) angeordnet ist.

4. Wellensystem nach Anspruch 1, ferner umfassend: eine Kopplerwelle (110), die zwischen dem Eingangselement (59) und der Innenwelle (52) angeordnet ist, wobei die Kopplerwelle (110) einen Eingangsendabschnitt (114), der mechanisch mit dem Eingangselement verbunden ist, einen Ausgangsendabschnitt (116), der selektiv an dem Kupplungssystem (132) anliegt, und einen Zwischenabschnitt (120) einschließt, wobei der Zwischenabschnitt (120) einen Flansch (123) einschließt, der sich von der Kopplerwelle (110) radial nach außen erstreckt.

5. Wellensystem nach Anspruch 4, wobei die Schubdämpferhalterung (146) einen radial nach innen vorstehenden Flanschabschnitt einschließt, der zwischen dem Flansch (123) an der Kopplerwelle und dem Schubdämpfer (140) angeordnet ist.

6. Wellensystem nach Anspruch 5, wobei die Schubdämpferhalterung (146) einen Wandabschnitt einschließt, der sich von dem radial nach innen vorstehenden Flanschabschnitt zwischen der Kopplerwelle (110) und der Außenwelle (38) erstreckt, wobei der Schubdämpfer (140) angrenzend an den radial nach innen vorstehenden Flanschabschnitt auf die Schubdämpferhalterung (146) aufgepresst ist.

7. Wellensystem nach Anspruch 4, wobei die Kopplerwelle (110) durch eine Keilwellenschnittstelle mechanisch mit dem Eingangselement (59) verbunden ist.

8. Wellensystem nach einem der vorhergehenden Ansprüche, wobei eine Reibungsschnittstelle zwischen dem Schubdämpfer (140) und der Innenwelle (52) existiert.

9. Luftfahrzeugsystem, umfassend:
ein luftatmendes Triebwerk (10), das einen Verdichter (12), eine mechanisch mit dem Verdichter verbundene Turbine (14) und eine fluidisch mit dem Verdichter (12) und der Turbine (14) verbundene Brennkammer (20) einschließt;
ein Getriebe, das mechanisch mit der Turbine verbunden ist;
einen Generator (30); und
ein Wellensystem (34) nach einem der vorhergehenden Ansprüche, das das Getriebe und den Generator wirkmäßig verbindet.

## Revendications

1. Système d'arbre (34) comprenant :
un arbre extérieur (38) comportant une surface extérieure et une surface intérieure définissant un conduit (50) ;
un arbre intérieur (52) s'étendant le long d'au moins une partie du conduit, l'arbre intérieur (52) comportant un passage s'étendant radialement, l'arbre intérieur (52) ayant une première extrémité (55) et une seconde extrémité (57) qui est opposée à la première extrémité ;
un élément d'entrée (59) disposé à la première extrémité de l'arbre intérieur (52) ; et
un amortisseur de poussée (140) disposé entre l'élément d'entrée (59) et l'arbre intérieur (52), l'amortisseur de poussée (140) étant configuré pour limiter la rotation relative entre l'arbre intérieur (52) et l'arbre extérieur (38) ;
un dispositif de retenue d'amortisseur de poussée (146) raccordé de manière fixe à l'arbre extérieur (38), dans lequel l'amortisseur de poussée (140) est supporté par le dispositif de retenue d'amortisseur de poussée (146) ; et **caractérisé par** :
un système d'embrayage (132) disposé entre l'élément d'entrée (59) et l'arbre intérieur (52), le système d'embrayage (132) reliant sélectivement l'élément d'entrée (59) et l'arbre intérieur (52).

2. Système d'arbre selon la revendication 1, dans lequel le système d'embrayage (132) comprend un embrayage à denture.

3. Système d'arbre selon la revendication 1, dans lequel l'amortisseur de poussée (140) est disposé radialement vers l'extérieur du système d'embrayage (132).

4. Système d'arbre selon la revendication 1, comprenant en outre : un arbre de coupleur (110) disposé entre l'élément d'entrée (59) et l'arbre intérieur (52), l'arbre de coupleur (110) comportant une partie d'extrémité d'entrée (114) reliée mécaniquement à l'élément d'entrée, une partie d'extrémité de sortie (116) venant en butée de manière sélective contre le système d'embrayage (132), et une partie intermédiaire (120), la partie intermédiaire (120) comportant une bride (123) qui s'étend radialement vers l'extérieur de l'arbre de coupleur (110).

5. Système d'arbre selon la revendication 4, dans lequel le dispositif de retenue d'amortisseur de poussée (146) comporte une section de bride faisant saillie radialement vers l'intérieur disposée entre la bride (123) sur l'arbre de coupleur et l'amortisseur de poussée (140).

6. Système d'arbre selon la revendication 5, dans lequel le dispositif de retenue d'amortisseur de poussée (146) comporte une partie de paroi qui s'étend de la section de bride faisant saillie radialement vers l'intérieur entre l'arbre de coupleur (110) et l'arbre extérieur (38), l'amortisseur de poussée (140) étant ajusté par pression sur le dispositif de retenue d'amortisseur de poussée (146) adjacent à la section de bride faisant saillie radialement vers l'intérieur.

7. Système d'arbre selon la revendication 4, dans lequel l'arbre de coupleur (110) est relié mécaniquement à l'élément d'entrée (59) au moyen d'une interface cannelée.

8. Système d'arbre selon une quelconque revendication précédente, dans lequel il existe une interface de frottement entre l'amortisseur de poussée (140) et l'arbre intérieur (52).

9. Système d'aéronef comprenant :
un moteur aérobie (10) comportant un compresseur (12), une turbine (14) reliée mécaniquement au compresseur et une chambre de combustion (20) reliée fluidiquement au compresseur (12) et à la turbine (14) ;
une boîte de vitesses reliée mécaniquement à la turbine ;
un générateur (30) ; et
un système d'arbre (34) selon une quelconque revendication précédente, reliant fonctionnellement la boîte de vitesses et le générateur.
